# EUROPÄISCHE PATENTANMELDUNG

(11) **EP 2 732 900 A1**
(43) Veröffentlichungstag der Anmeldung: **21.05.2014**
(21) Anmeldenummer: 12193337.8
(22) Anmeldetag: 20.11.2012
(51) Int. Cl.: B23K 9/00, B63C 11/40, B23K 9/073

(54) **Hyperbares Lichtbogenschweißen**

(71) Anmelder: Nordseetaucher GmbH, 22949 Ammersbeck (DE); AMT Maschinen- und Gerätetechnik GmbH, 52070 Aachen (DE)
(72) Erfinder: Schütte, Herbert, D-52072 Aachen (DE)
(74) Vertreter: Seemann, Ralph

(57) **Zusammenfassung**

Die Erfindung betrifft eine Einrichtung zur Lichtbogenschweißung unter Überdruck. Die erfindungsgemäße Einrichtung umfasst eine Versorgungsvorrichtung (10) zur Bereitstellung eines Schweißstroms und/oder einer Schweißspannung, ein Schott (11) zur Ausbildung eines Schweißraums (13) mit einer Schweißstelle (14) und ein Schweißgerät (15), das in dem Schweißraum (13) angeordnet oder anordbar ist und über eine elektrische Verbindung (16, 17, 17') mit der Versorgungsvorrichtung (10) über das Schott (11) verbunden oder verbindbar ist.

Zudem betrifft die Erfindung ein Verfahren zum Betreiben einer entsprechenden Schweißeinrichtung.

## Beschreibung

Die Erfindung betrifft eine Einrichtung zur Lichtbogenschweißung unter Überdruck. Zudem betrifft die Erfindung ein Verfahren zum Betreiben einer Schweißeinrichtung mit einem Schweißgerät, mittels dessen ein Lichtbogenschweißen in einer hyperbaren Atmosphäre ausgeführt wird.

DE 1 145 729 AS zeigt eine Vorrichtung zur Schutzgas-Lichtbogenschweißung, insbesondere mit Kohlendioxid, mit kontinuierlich vorgeschobener abschmelzender Drahtelektrode und einem induktiven Widerstand in Reihe mit dem Lichtbogen im Schweißstromkreis.

CH 421 339 PS offenbart eine Vorrichtung zum Antreiben einer draht- oder bandförmigen Schweißelektrode mit zwei Paaren von Rollen für die Führung der Elektrode, wobei von jedem Paar mindestens eine Rolle angetrieben ist und von jedem Rollenpaar eine Rolle mittels einer einstellbaren Feder nachgiebig gegen die andere hin und von dieser weg bewegt werden kann.

Bekannte Einrichtungen zur Lichtbogenschweißung und Verfahren zum Betreiben einer Schweißeinrichtung mit einem Schweißgerät, mittels dessen ein Lichtbogenschweißen in einer hyperbaren Atmosphäre ermöglicht ist, führen zu diversen Problemen beim Schweißen, die unter atmosphärischen Bedingungen nicht existieren. Die weltweit stetig ansteigende Planung und Durchführung von Tunnelbohrprojekten stellt eine große Herausforderung an Hersteller und Betreiber von Tunnelbohrwerken dar. Hiermit verbunden ist ein erheblicher Zeit- und Kostendruck, der es erforderlich macht, eine schnelle und kostengünstige Möglichkeit der Durchführung von Austausch- und Reparaturarbeiten bei laufendem Betrieb vorzunehmen. Insbesondere gehört hierzu die Instandsetzung von durch abrasiven Verschleiß zerstörten Schneidrädern und Schneidstählen des Bohrwerks. Um möglichst wenig Zeit zu verlieren, ist es sinnvoll, die anfallenden Reparaturen an den Schneidstählen des Bohrwerks einer Tunnelbohrmaschine an der Einsatzstelle direkt vor der Ortsbrustwand vorzunehmen. Hierbei herrscht ein entsprechend hoher Umgebungsdruck. Es existieren derzeit Projekte, die sich in Druckbereiche von 1 bar bis 20 bar ausweiten.

Es ist Aufgabe der vorliegenden Erfindung, eine Schweißeinrichtung und ein Verfahren zum Betreiben einer entsprechenden Schweißeinrichtung anzugeben, mittels dessen eine effiziente Schweißung bei hohen Drücken und einem widrigen Umfeld ermöglicht wird. Insbesondere soll dem Anwender hierbei ein Höchstmaß an Flexibilität und Bedienungskomfort geboten werden.

Gelöst wird diese Aufgabe durch eine Einrichtung zur Lichtbogenschweißung unter Überdruck, umfassend eine Versorgungsvorrichtung zur Bereitstellung eines Schweißstroms und einer Schweißspannung, ein Schott zur Ausbildung eines Schweißraums mit einer Schweißstelle und ein Schweißgerät, das in dem Schweißraum angeordnet oder anordbar ist und über eine elektrische Verbindung mit der Versorgungsvorrichtung über das Schott verbunden oder verbindbar ist.

Durch die erfindungsgemäße Einrichtung ist eine sehr sichere und effiziente Einrichtung zur Lichtbogenschweißung gegeben, da insbesondere die Versorgungsvorrichtung auf der atmosphärischen Seite angeordnet ist und über ein Schott mit der Überdruckseite eine Verbindung zu dem Schweißgerät, das insbesondere ein Schweißbrenner bzw. ein Handschweißgerät sein kann, ermöglicht ist.

Die Sicherheit wird weiterhin erhöht, dadurch, dass vorzugsweise durch das Schott wenigstens eine Druckgasleitung und/oder wenigstens eine Steuerleitung geführt ist. Hierdurch kann die Versorgungsvorrichtung von dem Schweißraum aus gesteuert werden und zudem erhöht sich die Sicherheit dadurch, dass der Gasbehälter unter atmosphärischen Bedingungen gelagert ist. Vorzugsweise ist in dem Schweißraum eine Kühlvorrichtung vorgesehen. Die Kühlvorrichtung dient insbesondere dazu, das Schweißgerät zu kühlen, also insbesondere das Handschweißgerät beispielsweise mit Kühlwasser zu versehen. Damit ist die Kühlvorrichtung innerhalb des hyperbaren Bereichs angeordnet. Die Kühlvorrichtung hat einen Kühlflüssigkeitsvorrat, der mit der Atmosphäre bzw. Umgebungsluft im hyperbaren Bereich kommuniziert. Dieses hat den Vorteil, dass eine Schlauchverbindung, durch die die Kühlflüssigkeit gefördert wird, durch den Überdruck in dem Schweißraum nicht abgeklemmt bzw. abgequetscht wird. Vorzugsweise leitet die Kühlvorrichtung Kühlflüssigkeit durch das Schweißgerät, wobei das Schweißgerät und die Kühlvorrichtung mit wenigstens einem Schlauch verbunden sind. Über den Druckausgleich über die Kühlvorrichtung kann an dieser Stelle ein Schlauch verwendet werden, so dass das Schweißgerät gut von einer Bedienperson bedient werden kann.

Vorzugsweise arbeitet das Schweißgerät mit einer kontinuierlich vorgeschobenen Drahtelektrode und es ist in dem Schweißraum eine von dem Schweißgerät getrennte erste Drahtvorschubvorrichtung vorgesehen. Die erste Drahtvorschubvorrichtung umfasst insbesondere einen Drahtvorrat. Beispielsweise ist der Drahtvorrat auf einer Rolle aufgerollt und wird mittels der ersten Drahtvorschubvorrichtung von der Drahtrolle abgezogen und in Richtung des Schweißgeräts gefördert. Die Drahtelektrode ist hierbei vorzugsweise ummantelt von einem Schlauch bzw. einem Mantel, um sowohl die Bedienperson als auch den Draht vor Beschädigungen zu schützen.

Vorzugsweise ist an dem Schweißgerät eine zweite Drahtvorschubvorrichtung vorgesehen. Diese arbeitet vorzugsweise nach einem Zieh- und Schubverfahren (Push/Pull). Insbesondere vorzugsweise ist die zweite Drahtvorschubvorrichtung in dem Schweißgerät integriert. Bei entsprechenden Problemen kann dann von der Bedienperson einfach das Schweißgerät inklusive der zweiten Drahtvorschubvorrichtung ausgetauscht werden, so dass wenig Zeit verloren geht.

Vorzugsweise ist im Schweißraum eine Steuervorrichtung vorgesehen, mittels der die Versorgungsvorrichtung steuerbar ist oder gesteuert wird. Die Bedienperson kann in der Steuervorrichtung beispielsweise den Schweißstrom einstellen und beispielsweise die Drahtvorschubgeschwindigkeit. Es können auch ein Notausknopf vorgesehen sein und weitere Steuerelemente, auf die im Folgenden noch einzugehen sein wird. Die Steuervorrichtung ist über elektrische Verbindungen und das Schott oder über Funk mit der Versorgungsvorrichtung verbunden und steuert entsprechend die Versorgungsvorrichtung. Die Steuervorrichtung ist insbesondere eine Bedienungsvorrichtung oder eine Fernbedienung und dient dazu, Schweißparameter einzustellen.

Insbesondere vorzugsweise ist die Versorgungsvorrichtung unter atmosphärischem Druck angeordnet und/oder der Schweißraum unter hyperbaren Druck gesetzt und/oder der Schweißraum steht unter hyperbarem Druck.

Besonders bevorzugt ist eine erste Drahtvorschubvorrichtung vorgesehen, die eine Verteilungsfunktion für eine elektronische Verbindung, eine elektrische Verbindung, eine Gasverbindung und/oder eine Kühlwasserverbindung zu dem Schweißgerät aufweist. Die erste Drahtvorschubvorrichtung integriert somit elektrische Kabelverbindungen, eine Kühlwasserschlauchverbindung, eine Gasleitung und/oder die Drahtelektrodenverbindung, die von der Kühlvorrichtung, der Versorgungsvorrichtung bzw. einer Gasvorratsvorrichtung auf der einen Seite zu dem Schweißgerät und der Steuervorrichtung auf der anderen Seite führt.

Insbesondere weist die erste Drahtvorschubvorrichtung auch einen Drahtvorrat auf und führt entsprechende Schlauchpakete, also Schläuche, in denen mehrere Komponenten, wie elektronische und elektrische Leitungen, Wasserleitungen, Druckgasleitungen, integriert sein können, vom Schott zur ersten Drahtvorschubvorrichtung auf der einen Seite und entsprechend zu den anderen Komponenten auf der anderen Seite.

Die Aufgabe wird ferner durch ein Verfahren zum Betreiben einer

Schweißeinrichtung mit einem Schweißgerät gelöst, mittels dessen ein Lichtbogenschweißen in einer hyperbaren Atmosphäre ausgeführt wird, das die folgenden Verfahrensschritte aufweist:
- kontinuierliches Vorschieben einer Drahtelektrode,
- Zurverfügungstellen eines Schweißstroms, der über die Drahtelektrode und einen Lichtbogen zu einem Werkstück fließt, wobei die Stromstärke auf einen konstanten ersten Wert geregelt wird.

Das Regeln auf den konstanten ersten Wert geschieht vorzugsweise mit einem PID-Regler. Unter einem PID-Regler wird im Rahmen der Erfindung auch ein PI-Regler verstanden. Der PI-Regler gemäß der Erfindung hat vorzugsweise ein PT1-Verhalten. Vorzugsweise wird die Schweißspannung überwacht und bei einer Schweißspannung, die unter einem vorgebbaren Wert sinkt, die Stromstärke auf einen zweiten Wert geregelt, der größer als der erste Wert ist und/oder eine Vorschubgeschwindigkeit der Drahtelektrode reduziert.

Vorzugsweise ist das Lichtbogenschweißen ein MAG-Schweißen, MAG-F-Schweißen, MIG-Schweißen oder MOG-Schweißen. Die ersten drei Schweißarten sind ein so genanntes Metall-Schutzgasschweißen. MAG-Schweißen steht für Metall-Aktivgasschweißen, MAG-F-Schweißen steht für Metall-Aktivgasschweißen mit einem Fülldraht, MIG-Schweißen steht für ein Metall-Inertgasschweißen und MOG-Schweißen steht für ein Metallschweißen ohne Schutzgas aber mit selbstschützendem Fülldraht. Aus Arbeitssicherheitsgründen sind diese Schweißverfahren mit einer Leerlaufspannungsbegrenzung von maximal 65 Volt versehen. Zudem ist ein Notaus-Druckknopf für den Anlagenfahrer vorgesehen. Dieser Notaus-Druckknopf kann in der Nähe bzw. an der Versorgungsvorrichtung angeordnet sein und ergänzend oder alternativ in der Nähe des oder an dem Schweißgerät(s) und/oder der Steuervorrichtung. Vorzugsweise wird für das MAG-, MAG-F- oder MIG-Schweißen ein Gas in den Schweißbereich gefördert, wobei der Gasdruck und/oder die Gasmenge an die Höhe des Drucks in der hyperbaren Atmosphäre, insbesondere in einem linearen Zusammenhang, angepasst wird.

Durch Vorsehen eines Gases bzw. das Fördern eines Gases in den Schweißbereich wird das Schweißergebnis deutlich verbessert. Bei Schweißen im Überdruck wurde herausgefunden, dass die Gasmenge erhöht werden muss, und zwar insbesondere in einem linearen Zusammenhang mit der Höhe des Drucks. Das heißt, bei 5 bar Überdruck muss mehr Gas in den Schweißbereich gefördert werden, als bei 2 bar Überdruck.

Vorzugsweise ist ein Verfahren zum hyperbaren Schweißen eines Werkzeugs, insbesondere einer Tunnelvortriebsmaschine, unter Verwendung einer erfindungsgemäßen Einrichtung vorgesehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer erfindungsgemäßen Einrichtung zur Lichtbogenschweißung und
- Fig. 2: eine schematische Blockdarstellung eines erfindungsgemäßen Verfahrens zum Betreiben einer Schweißeinrichtung.

In den Zeichnungen sind jeweils gleiche oder gleichartige Elemente und/oder Teile mit denselben Bezugsziffern versehen, so dass von einer erneuten Vorstellung jeweils abgesehen wird.

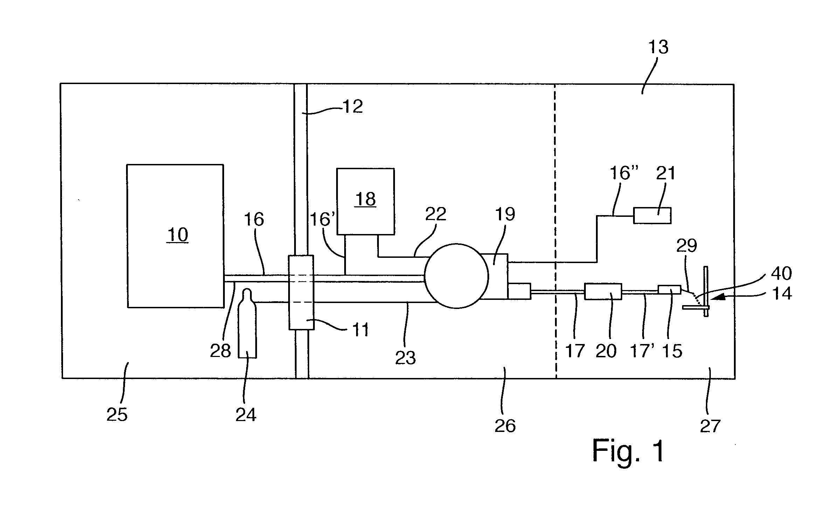

Fig. 1 zeigt schematisch eine erfindungsgemäße Einrichtung zur Lichtbogenschweißung unter Überdruck. Es ist eine Versorgungsvorrichtung 10 dargestellt, die in einem atmosphärischen Versorgungsbereich 25 beispielsweise eines Tunnels angeordnet ist. Zur Einrichtung zur Lichtbogenschweißung gehört gemäß dem Ausführungsbeispiel gemäß Fig. 1 auch ein Schweißgerät 15, das als Handschweißbrenner bezeichnet werden kann und von einer Bedienperson bedient wird, um eine Schweißung an der Schweißstelle 14 an einem Werkstück vorzunehmen. Das Werkstück ist in Fig. 1 auch schematisch dargestellt.

Das Schweißen geschieht über einen Lichtbogen 40, der sich von der fortlaufend vorgeschobenen Drahtelektrode 29 bis zur Schweißstelle 14 erstreckt. Die zum Schweißen und zur Erzeugung des Lichtbogens notwendige Leistung, d.h. der Schweißstrom und die Schweißspannung, wird durch die Versorgungsvorrichtung 10 zur Verfügung gestellt. Diese werden über eine Leitung 16 von der Versorgungsvorrichtung 10 zum Schweißgerät 15 und dort insbesondere zur Drahtelektrode 29 geführt. Die elektrische Verbindung 16 ist durch ein Schott 11 einer Schottwand 12 geführt, um den atmosphärischen Bereich 25 von einem hyperbaren Bereich, der Schweißraum 13 genannt wird, zu trennen.

Der Schweißraum 13 ist wieder unterteilt in einen hyperbaren Versorgungsbereich 26 und einen hyperbaren Arbeitsbereich 27. Diese beiden Bereiche sind durch die gestrichelte Linie gekennzeichnet abgetrennt.

Durch das Schott 11 werden auch weitere Leitungen geführt, die allerdings nicht alle dargestellt sind. Beispielsweise führt eine Steuerleitung 28 zurück zur Versorgungsvorrichtung 10, um beispielsweise durch die Fernbedienung 21 eingestellte Steuersignale über die elektrische Verbindung 16" und die Steuerleitung 28 zur Versorgungsvorrichtung 10 zu führen und dort entsprechend der gewählten Einstellungen einen Schweißstrom, eine Schweißspannung und insbesondere auch eine Fördergeschwindigkeit der Drahtelektrode 29 vorzugeben. Zudem ist eine Gasleitung 23 durch das Schott 11 geführt. Die Gasleitung 23 führt von einer Gasflasche 24 durch das Schott 11 zu einer Vorschubvorrichtung 19 und anschließend durch ein Schlauchpaket 17 sowie ein Schlauchpaket 17' zum Schweißgerät 15. Zudem kann eine Gasrückführleitung vorgesehen sein, die in Fig. 1 nicht dargestellt ist und auch durch das Schott 11 führt. Diese Gasrückführleitung dient dazu, Rauchentwicklung bzw. das durch die Schweißung erzeugte Reaktionsgas von der Schweißstelle 14 abzuführen.

Zum Kühlen des Schweißgerätes 15 ist eine Kühlvorrichtung 18 vorgesehen, die eine Kühlflüssigkeit über einen Wasserschlauch 22 durch die Vorschubvorrichtung 19 und die Schlauchpakete 17 und 17' zum Schweißgerät 15 führt und entsprechend zurückführt. Der Rückführungswasserschlauch ist in der Fig. 1 der Übersichtlichkeit wegen nicht dargestellt. Die Kühlvorrichtung 18 weist einen Druckausgleich auf, um die Kühlflüssigkeit, insbesondere Wasser, dem Druck auszusetzen, der im Schweißraum 13 herrscht. Durch Vorsehen einer Kühlvorrichtung 18 in dem Schweißraum 13, insbesondere in dem hyperbaren Versorgungsbereich 26 kann effizient das Schweißgerät 15 gekühlt werden.

Die Vorschubvorrichtung 19 dient dazu, eine Drahtelektrode 29 zum Schweißgerät 15 zu fördern. Die Vorschubvorrichtung 19 umfasst vorzugsweise auch einen Schweißdrahtvorrat, beispielsweise auf einer Rolle, und wickelt den Schweißdraht entsprechend von dieser Rolle ab und befördert diesen in Richtung des Schweißgerätes 15. Dieses funktioniert bei Entfernungen zwischen der Vorschubvorrichtung 19 und dem Schweißbrenner von bis zu 3 oder 4 Metern gut. Bei größeren Entfernungen, beispielsweise bis zu 20 m, ist es sinnvoll, eine Drahtfördervorrichtung 20 zusätzlich vorzusehen, die entsprechend den Schweißdraht zieht und das letzte Stück bis zum Ausgang des Schweißgerätes 15, d.h. bis zur Drahtelektrode, drückt.

Besonders bevorzugt ist eine Ausgestaltung, bei der das Schweißgerät 15 die Drahtfördervorrichtung 20 integriert hat. Es können im Übrigen auch weitere Zusatzgeräte vorgesehen sein und insbesondere elektrisch über die Vorschubvorrichtung 19 oder an dieser vorbei durch das Schott mit der Versorgungsvorrichtung 10 verbunden sein. Dieses kann beispielsweise ein Notausschalter sein oder eine Beleuchtungsvorrichtung. Zudem können auch Heizgeräte, wie eine Heizmatte, vorgesehen sein, um das Werkstück entsprechend vorzuheizen, um ein besseres Schweißergebnis zu erzielen.

Die Versorgungsvorrichtung 10 weist vorzugsweise mehrere Komponenten auf. Hierzu zählen eine Netzversorgung, ein Leistungsteil sowie eine Spannungs- und Strommessvorrichtung. Zudem können an der Versorgungsvorrichtung auch Sollwerte eingegeben werden, das Gerät selbst ein- und ausgeschaltet werden und Istwerte bzw. ein Störsignal ausgegeben werden. Es können hier auch verschiedene Regelungen stattfinden. Beispielsweise kann ein Regler vorgesehen sein, der die Messwerte des Stroms und der Spannung aufnimmt und mit Sollwerten vergleicht, um demgemäß das Leistungsteil der Versorgungsvorrichtung zu steuern. Es kann auch vorgesehen sein, den Drahtvorschub, d.h. die Vorschubvorrichtung 19, und/oder auch die Drahtfördervorrichtung 20 über die Versorgungsvorrichtung 10 zu versorgen und vorzugsweise auch zu steuern oder zu regeln.

Die Regelung, insbesondere die Schweißstromregelung erfolgt insbesondere auf analoger Basis über Operationsverstärker, die in der Versorgungsvorrichtung 10 untergebracht sind. Die Leistungselektronik der Versorgungsvorrichtung 10 arbeitet sekundärgetaktet mit 20 kHz und einer MOS-FET Endstufe. Der Strom-Regelkreis ist vorzugsweise als PI-Regler mit PT1-Verhalten aufgebaut. Hierbei wird der Stromsollwert als konstante Vorgabe in den Regler eingespeist und über einen Pulsweiten-Modulator an die Treiberstufe des Leistungsteils weitergegeben. Der Stromistwert wird über einen Shunt abgegriffen und mittels eines Differenz-Eingangsverstärkers normiert an den Regelkreis übergeben. Neben Schaltungen zur Strombegrenzung und Startverbesserung wird dem Stromregler eine dynamische Spannungsanpassung übergeordnet. Diese Spannungsanpassung misst während des Schweißprozesses ständig die Prozessspannung und beaufschlagt den Stromregler bei Unterschreitung eines einstellbaren Schwellwertes, beispielsweise 20 Volt, mit einem zusätzlichen Sollwert, so dass der Sollwert mit erhöht wird. Dieser Sollwert ist in Stärke und Geschwindigkeit, d.h. also in der Statik und der Dynamik einstellbar. Durch diese Kombination wird für einen kontrollierten Stromanstieg gesorgt, was eine starke Spritzerbildung beim Schweißen vermeidet, und zwar insbesondere während der Kurzschlussphasen. Die Schweißspannung ist also im Wesentlichen freilaufend, wohingegen auf einen konstanten Schweißstrom geregelt wird.

Der Arbeitsbereich gliedert sich insgesamt in drei Bereiche: den atmosphärischen Bereich, den hyperbaren Versorgungsbereich und den hyperbaren Arbeitsbereich. Im atmosphärischen Bereich sind die Versorgungsvorrichtung 10 mit Steuer- und Leistungselektronik sowie eine Schutzgasversorgung und allen für die Energieversorgung der Anlage notwendigen Anschlüsse untergebracht. Zudem kann ein weiterer externer Notausschalter vorgesehen sein, der es dem Überwachungspersonal erlaubt, im Notfall die gesamte schweißtechnische Anlage stromlos zu schalten. An diesen Bereich schließt sich ein hyperbarer Bereich des eigentlichen Bohrkopfes an. Dieser Bereich muss bei Bohrungen unter Wasserflächen bzw. nachrutschendem Erdreich ständig unter Überdruck stehen, um einen Einsturz der Tunneldecke zu vermeiden. Durch eine druckfeste Schottwand 12 ist der atmosphärische Bereich vom hyperbaren Bereich getrennt. Mittels einer Schottdurchführung 11 werden alle für den Schweißbetrieb notwendigen Versorgungsleitungen durch das Schott 11 geführt. Hierunter sind Schweißstrom- und Steuerleitungen sowie die Schutzgasversorgung in dem Arbeitsbereich zu verstehen.

Es können nicht nur Schweißarbeiten sondern auch Schneidarbeiten mittels der erfindungsgemäßen Einrichtung vorgenommen werden.

Der hyperbare Bereich ist beispielsweise in zwei Bereiche unterteilt, nämlich in einen dem Schneidrad des Tunnelbohrwerkzeuges vorgelagerten Versorgungsbereich und in einen beispielsweise durch eine Wand, die durch die gestrichelte Linie in Fig. 1 angedeutet sein soll, getrennten. Der Arbeitsbereich 27 ist stark mit Schmutz und Wasser kontaminiert und ist im Bereich des Schneidrades direkt vor der Ortsbrustwand. Im Versorgungsbereich sind Peripheriegeräte, Werkzeuge, Ersatzteile und benötigtes Schweißzubehör zu lagern. Diese Geräte und auch das Schweißgerät 15 werden über eine nicht dargestellte Personenschleuse vom atmosphärischen Bereich in den hyperbaren Bereich ein- und ausgeschleust. Das für die Arbeiten benötigte Verschleißmaterial und die Werkzeuge werden vorzugsweise über eine zusätzliche Materialschleuse übergeben. Die Schleusen selbst sind Bestandteil des hyperbaren Versorgungsbereichs. Die Schottdurchführung 11 ist das Bindeglied zwischen dem atmosphärischen und dem hyperbaren Bereich. Sie verhindert ein Austreten der im Überdruckbereich befindlichen Luft. Die Steuer- und Schweißstromkreise sowie die Schutzgasversorgung werden durch sie übertragen. Das Schott 11 umfasst beispielsweise eine ca. 30 mm starke Stahlplatte, die in die Schottwand 12 des Bohrwerkes eingebaut wird. In dieser Stahlplatte sind Übergabesteckverbinder zur beidseitigen Aufnahme von Anschlussleitungen vorgesehen. Um ein Austreten der Druckluft an diesen Stellen zu verhindern, werden die Steckverbinder in verschweißten, druckfesten Verbindungskanälen eingebaut und zusätzlich abgedichtet.

Die erforderlichen Signal- und Schweißleitungen sind von der sich im atmosphärischen Bereich befindlichen Schweißstromquelle, d.h. der Versorgungsvorrichtung 10 aus durch ein Zwischenschlauchpaket von ca. 10 m Länge zur Schottdurchführung geleitet. Hinter dem Schott 11 ist ein weiteres Zwischenschlauchpaket vorgesehen, das in Fig. 1 nur zwischen der Vorschubvorrichtung 19 und dem Schweißgerät 15 dargestellt ist.

Die Verbindungen werden vorzugsweise steckbar ausgeführt, um ein größtmögliches Maß an Flexibilität zu gewährleisten. Es können auch Zwischenschlauchpakete bis zu einer Gesamtlänge von 40 m eingesetzt werden.

Die Versorgungsvorrichtung 10 dient nicht nur zur Erzeugung des Schweißstroms, sondern auch als Versorgungseinheit für Peripheriegeräte wie die Kühlvorrichtung 18, die Vorschubvorrichtung 19, die Drahtfördervorrichtung 20 und weitere nicht dargestellte Geräte. Die Ausgangsspannung wird vorzugsweise auf 65 Volt Gleichspannung bzw. 42 Volt Wechselspannung eingestellt. Dies bietet den größtmöglichen Schutz des Schweißers gegen elektrische Gefährdung.

Zur einfacheren Bedienung ist eine Fernbedienung 21 vorgesehen, mittels der die Geräteeinstellungen, insbesondere der Schweißstrom, die Schweißspannung und/oder die Vorschubgeschwindigkeit des Drahtes eingestellt werden können. Zudem kann über die Fernbedienung auch die Betriebsart selbst eingestellt werden, beispielsweise ein Schweißprogramm für Elektroden- oder MSG-Schweißen oder ein Vorwärmprogramm. Der maximale Ausgangsstrom wird beispielsweise auf 600 A festgelegt, um nicht nur Schweißaufgaben zu realisieren, sondern auch Schneidarbeiten wie Fugenhobeln oder Druckluftfugen und auch Vorwärmprogramme zur Vermeidung von Heißrissen mittels Glühmatten.

Für die Bedienperson im hyperbaren Bereich kann mit wenigen Handgriffen die Bedienung vorgenommen werden. So kann zum einen die Betriebsart über einen Betriebsartenschalter, der MSG-Schweißen, Elektrodenhandschweißen oder Glühen als Einstellmöglichkeiten hat, und ansonsten über zwei Potenziometer die Möglichkeit gegeben werden, auf den Schweißprozess Einfluss zu nehmen. Damit ist die Bedienung für alle Betriebsarten nach außen hin für die Bedienperson identisch bzw. sehr ähnlich.

Mit einem ersten Potenziometer kann der Schweißstrom bzw. Glühstrom eingestellt werden. Mit dem zweiten Potenziometer kann beim MSG-Schweißen die Drahtgeschwindigkeit an den vorgegebenen Schweißstrom angepasst werden. Die Fernbedienung 21 ist in einem druck-und schlagfesten Gehäuse eingebaut. Neben dem eben beschriebenen Betriebsartenschalter und den beiden Potenziometern für die Einstellung des Schweißstroms und der Drahtgeschwindigkeit sind hier insbesondere noch ein Freigabeschalter zum Stromquellenstart sowie zwei Tasten zum Testen der Schutzgasmenge und der Drahtgeschwindigkeit sowie ein Notausschalter vorgesehen, um die schweißtechnische Anlage stromlos zu schalten. Es kann auch eine Anzeige vorgesehen sein, um den Schweißstrom und/oder die Schweißspannung anzuzeigen.

Die Vorschubvorrichtung 19 hat zum einen die Funktion des Drahtantriebes. Neben der Drahtförderung hat die Vorschubvorrichtung 19 vorzugsweise auch die Funktion einer Unterverteilung aller systemrelevanten Signale und Verbindungen. Insbesondere sind die Kühlvorrichtung 18, eine Arbeitsplatzleuchte, die nicht dargestellt ist, das Schweißgerät 15 und/oder Elektrodenhalter über separate Schnittstellen an die Vorschubvorrichtung 19 angeschlossen. Zudem kann die Vorschubvorrichtung 19 oder die Drahtfördervorrichtung 20 oder das Schweißgerät 15 ein Drosselventil aufweisen, das die Fördermenge eines Schutzgases einstellen lässt.

Die Vorschubvorrichtung 19 ist ausgestaltet, um beispielsweise eine 20 cm große und eine 5 kg schwere Drahtspule aufzunehmen. Sie könnte auch so ausgelegt sein, um eine 15 kg schwere Drahtspule mit einem Durchmesser von 300 mm aufzunehmen. Zur Drahtförderung dient ein Vier-Rollen-Antrieb mit einem 42 Volt und 90 Watt Gleichstrommotor. Es sind insbesondere hier Schnellverschlusskupplungen, beispielsweise zur Verbindung an den Wasserschlauch 22 oder die Wasserschläuche 22 vorgesehen. Bei größeren Abständen zwischen der Vorschubvorrichtung 19 und dem Schweißgerät 15 kann es notwendig sein, eine Drahtfördervorrichtung 20 vorzusehen, um den von der Vorschubvorrichtung 19 geschobenen Draht zusätzlich aus der Drahtführungsseele herauszuziehen.

Da beim Schweißprozess im Brenner bzw. im Schweißgerät 15 durch Verlustleistung und Abstrahlung eine hohe Wärme entsteht, muss dieses ausreichend gekühlt werden und zudem müssen die Verbindungsschläuche gegen Zerstörung durch Übertemperatur geschützt werden. Zudem muss das Schweißgerät 15 allerdings auch leicht und handlich sein. Aus diesem Grund ist eine Wasserkühlung sinnvoll.

Das Kühlgerät 18 arbeitet in einem offenen Kühlsystem nach dem Prinzip eines Luft-Wasser-Wärme-Tauschers. Dabei wird aus einem Wassertank das kalte Kühlwasser mittels einer Kreiselpumpe durch den Schweißbrenner bzw. das Schweißgerät 15 gedrückt und erwärmt. Anschließend durchläuft das rückläufige Wasser im Kühlgerät einen Kühler und wird im Wassertank wieder aufgefangen. Der Abtransport der an den Kühler abgegebenen Wärme geschieht durch ein Kühlgebläse, dessen Luft den Kühler durchströmt. Um zu verhindern, dass der Überdruck in der Schweißkammer die Wasserschläuche der Brennerkühlung nicht abquetscht und so den Durchfluss des Kühlwassers blockiert, muss der Druck im Kühlsystem immer höher sein als der Umgebungsdruck. Um diesen Druck zu erzielen, befindet sich die Kühlvorrichtung 18 im hyperbaren Bereich. Durch die offene Bauweise des Systems und das Vorsehen einer Be- und Entlüftung des Wassertanks für einen Druckausgleich entsteht der Überdruck im Kühlsystem durch den Förderdruck der Kühlwasserpumpe.

Es hat sich herausgestellt, dass insbesondere beim MAG-Schweißen das Strom-Spannungs-Verhältnis und der Plasmadruck im Lichtbogen sich im Vergleich zu Schweißungen in atmosphärischer Umgebung beim Schweißen in hyperbarer Umgebung unterscheiden. Zum einen verursacht die durch den Überdruck erzeugte Verdrängung bzw. Einschnürung des Schutzgases eine nicht ausreichende Abdeckung der Schweißzone und sorgt so für eine erhöhte Porenbildung und verunreinigte Schweißnähte. Zum anderen ändert sich der Spannungsabfall im Lichtbogen, was wiederum zu einer schlechten Tropfenablösung, Spritzerbildung und Bindefehlern führt.

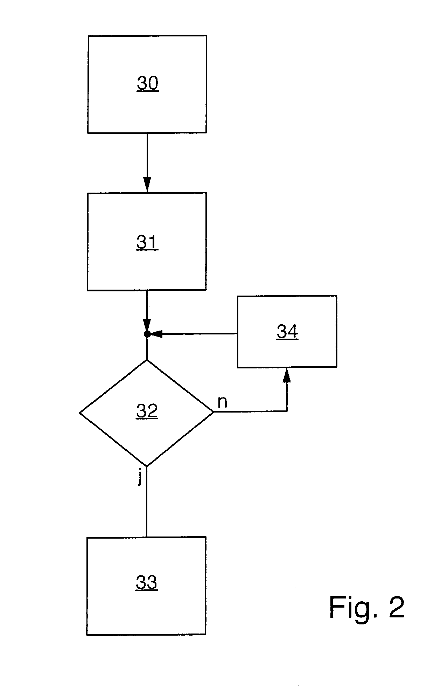

Diese Probleme werden zum einen dadurch gelöst bzw. beseitigt, dass die Schutzgasmenge bei Überdruck bzw. in der hyperbaren Umgebung erhöht wird, zum anderen ein Verfahren verwendet wird, das schematisch in Fig. 2 dargestellt ist. Beim Schweißen wird beispielsweise ein Metallpulverfülldraht mit 1,2 mm Durchmesser verwendet und ein Schutzgas mit 82% Argon und 18% CO₂. Die Schutzgasmenge wird etwa proportional zum Absolutdruck angepasst. Das heißt, wenn der Absolutdruck sich verdoppelt, wird auch die Schutzgasmenge verdoppelt. Die exakte Einstellung der Gasmenge kann die Bedienperson am Arbeitsplatz beispielsweise mittels eines Prüfröhrchens und durch Verstellung der Gasdrossel im Drahtvorschubgerät vornehmen.

Um nun auch beim MSG-Schweißen, und insbesondere bei einem MAG-Schweißen, auch bei Überdruck ein gutes Schweißergebnis zu erzielen, wurde in Abkehr der bisherigen Schweißverfahren mit einem konstanten Schweißstrom gearbeitet. In Fig. 2 ist dieses schematisch dargestellt. Bei 30 wird die Drahtvorschubgeschwindigkeit eingestellt. Als nächstes wird bei 31 der Schweißstrom eingestellt. Bei 32 wird abgefragt, ob eine vorgegebene Schweißspannung erreicht ist, d.h. die Schweißspannung oberhalb eines vorgebbaren Wertes liegt. Für diesen Fall, d.h. wenn dieses mit ja (j) beantwortet wird, wird der Schweißstrom auf einen konstanten Wert geregelt. Dieses geschieht bei 33. Vorzugsweise wird hierzu ein PID-Regler verwendet.

Die Regelung an sich bzw. der PID-Regler selbst ist vorzugsweise in der Versorgungsvorrichtung 10 untergebracht.

Für den Fall, dass die Schweißspannung unter einen vorgebbaren Wert absinkt, beispielsweise dadurch, dass die Drahtvorschubgeschwindigkeit zu groß eingestellt wurde, so dass der Schweißdraht, der in dem Bereich, der dem Werkzeug nahe ist, als Drahtelektrode 29 fungiert, zu nah an das Werkstück gelangt, so dass der Plasmabogen bzw. Lichtbogen zu kurz ist, so dass die hierüber abfallende Spannung zu niedrig wird, wird bei 34 der Schweißstrom erhöht, so dass mehr Schweißdraht verbraucht wird und so die zu hohe Drahtvorschubgeschwindigkeit kompensiert wird. Alternativ kann auch die Drahtvorschubgeschwindigkeit gesteuert oder geregelt reduziert werden. Es können auch beide Maßnahmen parallel ausgeführt werden.

Mit dem erfindungsgemäßen Verfahren sind ein stabiler Schweißprozess und eine stabile Lichtbogenlänge ermöglicht. Um Kurzschlüsse bei einem Drahtanhaften zu vermeiden, ist vorzugsweise auch zusätzlich eine Spannungsüberwachung mit nachgeschalteter Dynamiksteuerung vorgesehen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Versorgungsvorrichtung
- 11: Schott
- 12: Schottwand
- 13: Schweißraum
- 14: Schweißstelle
- 15: Schweißgerät
- 16, 16', 16": elektrische Verbindung
- 17, 17': Schlauchpaket
- 18: Kühlvorrichtung
- 19: Vorschubvorrichtung
- 20: Drahtfördervorrichtung
- 21: Fernbedingung
- 22: Wasserschlauch
- 23: Gasleitung
- 24: Gasflasche
- 25: atmosphärischer Versorgungsbereich
- 26: hyperbarer Versorgungsbereich
- 27: hyperbarer Arbeitsbereich
- 28: Steuerleitung
- 29: Drahtelektrode
- 30: Einstellen der Drahtvorschubgeschwindigkeit
- 31: Schweißstrom einstellen
- 32: Ist-Schweißspannung > als ein vorgebbarer Wert
- 33: PID-Regeln auf konstanten Schweißstrom
- 34: Schweißstrom erhöhen
- 40: Lichtbogen

## Patentansprüche

1. Einrichtung zur Lichtbogenschweißung unter Überdruck, umfassend eine Versorgungsvorrichtung (10) zur Bereitstellung eines Schweißstroms und einer Schweißspannung, ein Schott (11) zur Ausbildung eines Schweißraums (13) mit einer Schweißstelle (14) und ein Schweißgerät (15), das in dem Schweißraum (13) angeordnet oder anordbar ist und über eine elektrische Verbindung (16, 17, 17') mit der Versorgungsvorrichtung (10) über das Schott (11) verbunden oder verbindbar ist.

2. Einrichtung nach Anspruch 1, **dadurch gekennzeichnet, dass** durch das Schott (11) wenigstens eine Druckgasleitung (23) und/oder wenigstens eine Steuerleitung (28) geführt ist.

3. Einrichtung nach Anspruch 1 oder 2, **dadurch gekennzeichnet, dass** in dem Schweißraum (13) eine Kühlvorrichtung (18) vorgesehen ist.

4. Einrichtung nach Anspruch 3, **dadurch gekennzeichnet, dass** die Kühlvorrichtung (18) Kühlflüssigkeit durch das Schweißgerät (15) leitet, wobei das Schweißgerät (15) und die Kühlvorrichtung (18) mit wenigstens einem Schlauch (17, 17', 22) verbunden sind.

5. Einrichtung nach einem der Ansprüche 1 bis 4, **dadurch gekennzeichnet, dass** das Schweißgerät (15) mit einer kontinuierlich vorgeschobenen Drahtelektrode (29) arbeitet und in dem Schweißraum (13) eine von dem Schweißgerät (15) getrennte erste Drahtvorschubvorrichtung (19) vorgesehen ist.

6. Einrichtung nach Anspruch 5, **dadurch gekennzeichnet, dass** an dem Schweißgerät (15) eine zweite Drahtvorschubvorrichtung (20) vorgesehen ist.

7. Einrichtung nach einem der Ansprüche 1 bis 6, **dadurch gekennzeichnet, dass** im Schweißraum (13) eine Steuervorrichtung (21) vorgesehen ist, mittels der die Versorgungsvorrichtung (10) steuerbar ist oder gesteuert wird.

8. Einrichtung nach einem der Ansprüche 1 bis 7, **dadurch gekennzeichnet, dass** die Versorgungsvorrichtung (10) unter atmosphärischem Druck angeordnet ist und/oder der Schweißraum (13) unter hyperbaren Druck gesetzt ist oder steht.

9. Einrichtung nach einem der Ansprüche 5 bis 8, **dadurch gekennzeichnet, dass** die erste Drahtvorschubvorrichtung (19) eine Verteilungsfunktion für eine elektronische Verbindung, eine elektrische Verbindung, eine Gaszuführungsverbindung und/oder eine Kühlwasserverbindung zu dem Schweißgerät (15) aufweist.

10. Verfahren zum Betreiben einer Schweißeinrichtung mit einem Schweißgerät (15) mittels dessen ein Lichtbogenschweißen in einer hyperbaren Atmosphäre ausgeführt wird, mit den folgenden Verfahrensschritten:
- kontinuierliches Vorschieben einer Drahtelektrode (29),
- Zurverfügungstellen eines Schweißstroms, der über die Drahtelektrode (29) und einen Lichtbogen (40) zu einem Werkstück (14) fließt, wobei die Stromstärke auf einen konstanten ersten Wert geregelt wird.

11. Verfahren nach Anspruch 10, **dadurch gekennzeichnet, dass** die Schweißspannung überwacht wird und bei einer Schweißspannung, die unter einen vorgebbaren Wert sinkt, die Stromstärke auf einen zweiten Wert geregelt wird, der größer als der erste Wert ist und/oder einer Vorschubgeschwindigkeit der Drahtelektrode (29) reduziert wird.

12. Verfahren nach Anspruch 10 oder 11, **dadurch gekennzeichnet, dass** das Lichtbogenschweißen ein MAG-Schweißen, ein MAG-F-Schweißen, ein MIG-Schweißen oder ein MOG-Schweißen ist.

13. Verfahren nach Anspruch 12, **dadurch gekennzeichnet, dass** für das MAG-, MAG-F- oder MIG-Schweißen ein Gas in den Schweißbereich gefördert wird, wobei der Gasdruck und/oder die Gasmenge an die Höhe des Drucks in der hyperbaren Atmosphäre, insbesondere in einem linearen Zusammenhang, angepasst wird.

14. Verfahren zum hyperbaren Schweißen eines Werkzeugs, insbesondere einer Tunnelvortriebsmaschine, unter Verwendung einer Einrichtung nach einem der Ansprüche 1 bis 9.
